(19) Europäisches Patentamt
European Patent Office
Office européen des brevets

(11) **EP 3 648 281 A1**

(12) **EUROPÄISCHE PATENTANMELDUNG**

(43) Veröffentlichungstag:
**06.05.2020 Patentblatt 2020/19**

(51) Int Cl.:
***H02J 3/24*** *(2006.01)*    *H02J 3/00* *(2006.01)*

(21) Anmeldenummer: **18203415.7**

(22) Anmeldetag: **30.10.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft 80333 München (DE)**

(72) Erfinder: **Piel, Stefan 45359 Essen (DE)**

(54) **VERFAHREN UND EINRICHTUNG ZUM ERKENNEN EINES EREIGNISSES IN EINEM ELEKTRISCHEN NETZ**

(57)    Die Erfindung bezieht sich auf ein Verfahren zum Erkennen eines Ereignisses in einem elektrischen Energieversorgungsnetz (20), wobei bei dem Verfahren an zumindest einer Stelle des elektrischen Energieversorgungsnetzes elektrische Kenngrößenwerte (KG) gemessen oder mit an der zumindest einen Stelle gemessenen Messwerten (D) errechnet werden, für ein oder mehr vordefinierte Ereignisse, die im elektrischen Energieversorgungsnetz auftreten können, auf der Basis eines das Netz abbildenden Netzmodells jeweils ereignisbezogene Referenzwerte (RW) errechnet werden, die im Falle eines Eintretens des jeweiligen Ereignisses den Kenngrößenwerten (KG-Werten) zumindest näherungsweise entsprechen würden, für jedes vordefinierte Ereignis auf der Basis der jeweiligen ereignisbezogenen Referenzwerte (RW) und der Kenngrößenwerte (KG) jeweils ein ereignisbezogener Ähnlichkeitswert ermittelt wird, und anhand des oder der ereignisbezogenen Ähnlichkeitswerte ($\sigma$) ermittelt wird, ob eines der vordefinierten Ereignisse eingetreten ist.

FIG 5

EP 3 648 281 A1

**Beschreibung**

In elektrischen Energieversorgungsnetzen können Störungen des elektrischen Betriebs durch unvorhergesehene Ereignisse im Netz zu einer umfangreichen Beeinträchtigung oder weitgehend zu einem vollständigen Zusammenbruch des Netzbetriebs führen. Bei Fehlen hinreichender Informationen über den Ort und die Ursache eines möglichen Ereignisses ist ein rechtzeitiges und zielgerichtetes Einleiten geeigneter Gegenmaßnahmen erschwert oder unmöglich, was in der Folge zu einer weitergehenden Destabilisierung des Energieversorgungsnetzes bis hin zum vollständigen Zusammenbruch führen kann.

In diesem Zusammenhang ist bekannt, dass Daten von in einem elektrischen Energieversorgungsnetz installierten Zeigermessgeräten - sogenannten Phasor Measuring Units, nachfolgend auch kurz als PMU bezeichnet - dazu verwendet werden können, durch Analyse des zeitlichen Verlaufs der Daten Rückschlüsse auf die Ursache eines Ereignisses in dem Energieversorgungsnetz zu ziehen.

Der Erfindung liegt die Aufgabe zugrunde, ein Verfahren zum Erkennen eines Ereignisses in einem elektrischen Netz anzugeben, das sich besonders einfach durchführen lässt und besonders einfach handhabbar ist.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß ein Verfahren zum Erkennen eines Ereignisses in einem elektrischen Netz vorgesehen, wobei bei dem Verfahren an zumindest einer Stelle des Netzes elektrische Kenngrößenwerte gemessen oder mit an der zumindest einen Stelle gemessenen Messwerten errechnet werden, für ein oder mehr vordefinierte Ereignisse, die im Netz auftreten können, auf der Basis eines das Netz abbildenden Netzmodells jeweils ereignisbezogene Referenzwerte errechnet werden, die im Falle eines Eintretens des jeweiligen Ereignisses den Kenngrößenwerten zumindest näherungsweise entsprechen würden, für jedes vordefinierte Ereignis auf der Basis der jeweiligen ereignisbezogenen Referenzwerte und der Kenngrößenwerte jeweils ein ereignisbezogener Ähnlichkeitswert ermittelt wird, und anhand des oder der ereignisbezogenen Ähnlichkeitswerte ermittelt wird, ob eines der vordefinierten Ereignisse eingetreten ist.

Ein wesentlicher Vorteil des erfindungsgemäßen Verfahrens ist darin zu sehen, dass dieses auf der Basis von Kenngrößen durchgeführt werden kann, die für einen Anwender bzw. einen Fachmann auf dem Gebiet der Energieversorgung auf der Basis seiner technisch physikalischen Kenntnisse interpretierbar sind. Es ist einem Fachmann somit in besonders einfacher Weise möglich, das erfindungsgemäße Verfahren durchzuführen bzw. eine auf der Basis des erfindungsgemäßen Verfahrens arbeitende Einrichtung in geeigneter Weise einzustellen bzw. zu parametrieren.

Als besonders vorteilhaft wird es angesehen, wenn durch Normierung der Kenngrößenwerte und der Referenzwerte normierte Referenzwerte und normierte Kenngrößenwerte gebildet werden, für jeden normierten Kenngrößenwert und jeden zugehörigen normierten Referenzwert jeweils ein ereignisbezogener Ähnlichkeitsfunktionswert gebildet wird und der oder die ereignisbezogenen Ähnlichkeitswerte jeweils ermittelt werden durch zeitliche gewichtete Mittelung der ereignisbezogenen Ähnlichkeitsfunktionswerte über der Zeit in einem vorgegebenen Zeitfenster.

Bei der letztgenannten Variante ist es von Vorteil, wenn vor der Normierung der Referenzwerte und der Kenngrößenwerte die Referenzwerte um einen stationären Offsetwert korrigiert werden.

Darüber hinaus wird es als vorteilhaft angesehen, wenn die Kenngrößenwerte zu vorgegebenen Zeitpunkten gemessen oder für vorgegebene Zeitpunkte errechnet werden, die ereignisbezogenen Referenzwerte jeweils für dieselben vorgegebenen Zeitpunkte errechnet werden und der oder die ereignisbezogenen Ähnlichkeitswerte jeweils für die vorgegebenen Zeitpunkte ermittelt werden durch zeitliche Gewichtung der Ähnlichkeitsfunktionswerte über der Zeit in einem vorgegebenen Zeitfenster, das vor dem jeweils vorgegebenen Zeitpunkt liegt oder mit diesem endet.

Die zeitliche Gewichtung der Ähnlichkeitsfunktionswerte erfolgt vorzugsweise über der Zeit in dem vorgegebenen Zeitfenster mit Gewichtungsfaktoren, die zeitabhängig oder zeit- und amplitudenabhängig sind.

Eine zeitliche Gewichtung der Ähnlichkeitsfunktionswerte über der Zeit kann in vorteilhafter Weise in dem vorgegebenen Zeitfenster mit Gewichtungsfaktoren erfolgen, die im Zeitfenster mit zunehmender Zeit abnehmen.

Eine Gewichtung der Ähnlichkeitsfunktionswerte erfolgt besonders bevorzugt auf der Basis einer Gewichtung $w_i$, die sich aus einem zeitabhängigen Teil $w_i^t$ und einem amplitudenabhängigen Teil $w_i^a$ wie folgt zusammensetzt:

$$w_i = w_i^{\ t} \cdot w_i^{\ a}$$

Eine amplitudenabhängige Gewichtung der Ähnlichkeitsfunktionswerte in dem vorgegebenen Zeitfenster kann in vorteilhafter Weise mit einem amplitudenabhängigen Teil $w_i^a$ erfolgen gemäß

$$w_i^{\ a} = \left( \frac{\max\left(\Delta A_i^{\ act}, \Delta A_i^{\ ref}\right)}{\max\left(\Delta A_{\max}^{\ act}, \Delta A_{\max}^{\ ref}\right)} \right)$$

mit

$\Delta A_i^{act/ref}$ : absolute Differenz von Kenngrößenwert aus Messung bzw. Referenz und zugehörigem stationärem Wert zum i-ten Zeitpunkt im vorgegebenen Zeitfenster,

$\Delta A_{max}^{act/ref}$ : Maximalwert der absoluten Differenz der KenngrößenWerte aus Messung bzw. Referenz und stationärem Kenngrößenwert im gesamten vorgegebenen Zeitfenster.

Die elektrischen Kenngrößenwerte sind vorzugsweise Amplitudenwerte, Phasenwerte und/oder Phasenwinkeldifferenzwerte.

Besonders vorteilhaft ist es, wenn die elektrischen Kenngrößenwerte Amplitudenwerte oder Phasenwerte von Zeigermessgrößen sind oder mit Amplitudenwerten und/oder Phasenwerten von Zeigermessgrößen errechnet worden sind.

Bei einer bevorzugten Ausführungsvariante ist vorgesehen, dass die Kenngrößenwerte messstellenübergreifend sind und mit an zumindest zwei Stellen gemessenen Messwerten errechnet werden.

Auch ist es vorteilhaft, wenn die ereignisbezogenen Ähnlichkeitswerte auf der Basis eines Netzmodells, das durch maschinelles Lernen eines Computersystems erstellt worden ist, errechnet werden.

Die ereignisbezogenen Ähnlichkeitswerte werden vorzugsweise in einem zumindest zeitweise mindestens zwei Prozesse gleichzeitig ausführenden Rechner ermittelt, von denen einer ein Datenanalyse-Prozess und einer ein Lern-Prozess ist.

Auch ist es vorteilhaft, wenn die ereignisbezogenen Ähnlichkeitswerte in einem Rechner ermittelt werden, der parallel zumindest zwei Hauptprozesse durchführt, von denen jeweils einer den Datenanalyse-Prozess und der andere den Lern-Prozess durchführt und die jeweils abwechselnd und relativ zueinander gegenläufig in den Datenanalyse-Prozess und den Lern-Prozess umgeschaltet werden.

Die Erfindung bezieht sich darüber hinaus auf eine Einrichtung zum Erkennen eines Ereignisses in einem elektrischen Netz. Erfindungsgemäß ist die Einrichtung ausgestattet mit einer Datenerfassungseinrichtung, die dazu ausgebildet ist, an zumindest einer Stelle des Netzes elektrische Kenngrößenwerte zu messen oder mit an der zumindest einen Stelle gemessenen Messwerten zu errechnen, und einer Ereignisanalyseeinrichtung, die dazu ausgebildet ist, für ein oder mehr vordefinierte Ereignisse, die im Netz auftreten können, auf der Basis eines das Netz abbildenden Netzmodells jeweils ereignisbezogene Referenzwerte zu errechnen, die im Falle eines Eintretens des jeweiligen Ereignisses den Kenngrößenwerten zumindest näherungsweise entsprechen würden, für jedes vordefinierte Ereignis auf der Basis der jeweiligen ereignisbezogenen Referenzwerte und der Kenngrößenwerte jeweils einen ereignisbezogenen Ähnlichkeitswert zu ermitteln, und anhand des oder der ereignisbezogenen Ähnlichkeitswerte zu ermitteln, ob eines der vordefinierten Ereignisse eingetreten ist.

Die Erfindung wird nachfolgend anhand von Ausführungsbeispielen näher erläutert; dabei zeigen beispielhaft

Figur 1 ein Ausführungsbeispiel für eine Einrichtung zum Erkennen eines Ereignisses in einem elektrischen Netz,

Figur 2 beispielhaft einen zeitlichen Verlauf einer Kenngröße und den der zugehörigen Referenz,

Figur 3 ein Ausführungsbeispiel für ein lernendes Netz, das bei der Einrichtung gemäß Figur 1 eingesetzt werden kann,

Figur 4 ein Ausführungsbeispiel für die Arbeitsweise des lernenden Netzes gemäß Figur 3,

Figur 5 ein weiteres Ausführungsbeispiel für eine mögliche Arbeitsweise des lernenden Netzes gemäß Figur 3,

Figur 6 ein Ausführungsbeispiel für eine Zuordnung von Referenzen zu durch spezifische Zeitbereiche definierte Ereignisklassen und

Figur 7 ein Ausführungsbeispiel für eine hardwareseitige Realisierung der Einrichtung gemäß Figur 1.

In den Figuren werden der Übersicht halber für identische oder vergleichbare Komponenten stets dieselben Bezugszeichen verwendet.

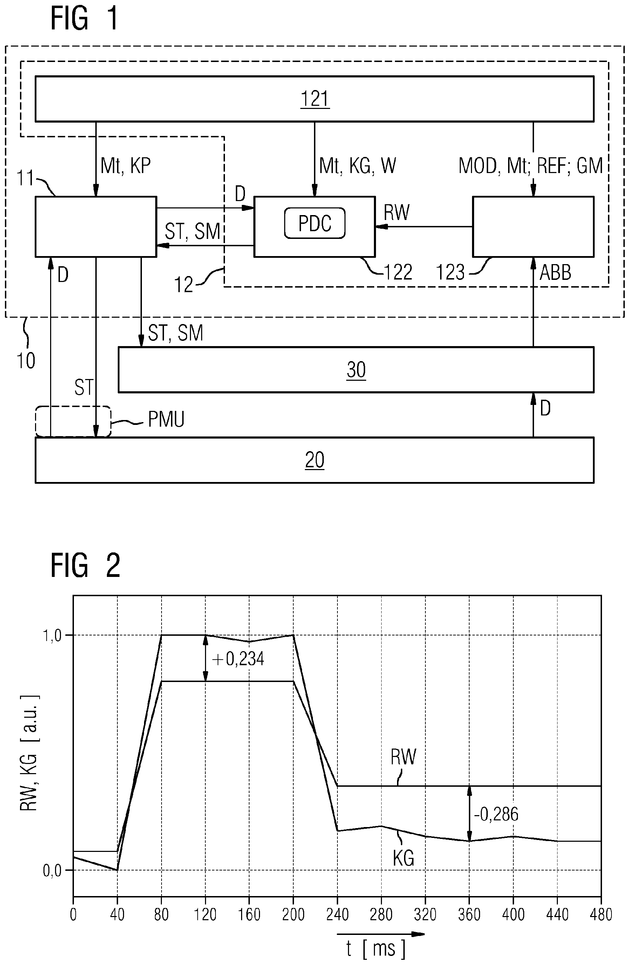

Die Erfindung zeigt eine Einrichtung 10 zum Erkennen eines Ereignisses in einem elektrischen Energieversorgungsnetz 20, das von der Einrichtung 10 auf ein Ereignis hin überwacht wird. Die Einrichtung 10 kann mit einem Netzleitsystem 30 in Verbindung stehen, wie dies beispielhaft in der Figur 1 gezeigt ist.

Die Einrichtung 10 umfasst bei dem Ausführungsbeispiel gemäß Figur 1 eine Datenerfassungseinrichtung 11 sowie eine Ereignisanalyseeinrichtung 12. Die Ereignisanalyseeinrichtung 12 weist eine Konfigurationsdatenbank 121, ein Ereignisanalysemodul 122 und ein Simulationsmodul 123 auf.

Die Konfigurationsdatenbank 121 kann Daten hinsichtlich auszuwertender bzw. zu messender Messpunkte Mt, Kommunikationsparameter KP, die eine Kommunikation mit beispielsweise dem Netzleitsystem 30 oder mit dem elektrischen Energieversorgungsnetz 20 verbundenen Messgeräten ermöglichen, Kenngrößen KG für die Arbeitsweise des Ereignisanalysemoduls 122, Gewichtungen W, ein Netzmodul MOD, Referenzereignismodelle REF sowie Gegenmaßnahmen GM im Falle eines erkannten Ereignisses enthalten.

Das Simulationsmodul 123 steht vorzugsweise mit der Konfigurationsdatenbank 121 sowie mit dem Netzleitsystem 30 in Verbindung, von dem das Simulationsmodul 123 beispielsweise ein das elektrische Energieversorgungsnetz 20 abbildendes Netzabbild ABB erhalten kann.

Die Einrichtung 10 gemäß Figur 1 kann beispielsweise wie folgt betrieben werden:
Die Datenerfassungseinrichtung 11 erfasst zu den in der Konfigurationsdatenbank 121 vorgegebenen Messpunkten Mt Messdaten bzw. Messwerte D, bei denen es sich beispielsweise um Phasenzeigermesswerte, die an einer oder mehreren Stellen des elektrischen Energieversorgungsnetzes 20 erfasst werden, handeln kann. Die Phasenzeigermesswerte werden vorzugsweise von Phasenzeigermessgeräten, die nachfolgend auch nur kurz PMUs genannt werden, erzeugt.

Die Messdaten D werden zum Ereignisanalysemodul 122 übermittelt, das von dem Simulationsmodul 123 Referenzwerte RW erhält. Das Ereignisanalysemodul 122 vergleicht die Messdaten D mit den Referenzwerten RW, wie weiter unten noch im Detail erläutert werden wird, und prüft anhand der Referenzwerte RW, ob ein durch die Referenzereignismodelle REF der Konfigurationsdatenbank 121 vordefiniertes Ereignis eingetreten ist. Ist dies der Fall, so erzeugt das Ereignisanalysemodell 122 vorzugsweise Anweisungen ST sowie Meldungen SM, die ein erkanntes Ereignis definieren und Gegenmaßnahmen GM enthalten, die sich auf das erkannte Ereignis beziehen. Die Meldungen SM und die Anweisungen ST werden zum Netzleitsystem 30 und/oder zum elektrischen Versorgungsnetz 20 übertragen.

Das Simulationsmodul 123 erzeugt die Referenzwerte RW vorzugsweise anhand der in der Konfigurationsdatenbank 121 abgespeicherten Referenzereignismodelle REF sowie anhand des Netzabbildes ABB, das von dem Netzleitsystem 30 übermittelt wird.

Vorteilhafte Ausgestaltungen bzw. vorteilhafte Arbeitsweisen der Einrichtung 10 gemäß Figur 1 werden nachfolgend anhand von Ausführungsbeispielen näher erläutert:

### Messdatenerfassung

Die dem oben angesprochenen Vergleich zugrunde liegenden Eingangsdaten beschränken sich nicht auf zeitsynchrone PMU-Daten, sondern können auch nicht zeitsynchron gemessene elektrische Daten enthalten, die aufgrund einer hinreichend hohen Abtastrate eine für die vorliegende Anwendung ausreichend genaue zeitliche Zuordnung erlauben und damit weitergehend eine Bestimmung der Phasenlage netzsynchroner Signale (Strom, Spannung) erlauben.

Ohne Beschränkung der Allgemeinheit beziehen sich die nachfolgenden Ausführungen beispielhaft auf die Verarbeitung von PMU-Daten.

### Ermittlung des Netzzustandes

Die zyklische Gewinnung des Netzabbildes kann bei hinreichender Abdeckung des Netzes mit Phasenzeigermessgeräten PMU unabhängig von der Möglichkeit der Anbindung an ein Netzleitsystem direkt aus den PMU-Daten selbst ermittelt werden. Dies erlaubt eine deutlich schnellere Daten-Verarbeitung und damit einhergehend eine erhöhte Aktualisierungsrate des Netzabbildes; aufgrund der geringeren Veränderungen der den Netzzustand beschreibenden Größen zwischen zwei Aktualisierungen ist damit im Mittel der Vergleich zwischen Messung und Referenz wesentlich zuverlässiger.

### Auswertungszyklus

Die PMU-Daten werden vorzugsweise in einem Ringspeicher aufgenommen, dessen Größe so gewählt ist, dass im Fall eines Netzereignisses hinreichend Daten im sogenannten Auswertungs-Bereich, der neben dem Zeitraum des Ereignisses selbst (Ereignis-Bereich) auch einen Zeitraum vor Eintritt des Ereignisses (stationärer Bereich) umfasst, zur Verfügung stehen. Die zugehörigen Zeitbereiche werden vom Anwender entsprechend festgelegt; liegen verschiedene Klassen von Referenzwerten RW (nachfolgend auch kurz Referenzen genannt) mit unterschiedlich langen Ereignis-Bereichen vor (siehe weiter unten Unterabschnitt "Ereignis-Klassen"), wird der größte Zeitbereich bei der Auslegung des Ringspeichers zugrunde gelegt. Die nachfolgend beschriebene Datenverarbeitung erfolgt vorzugsweise gemäß einer oder mehrerer der folgenden Varianten:

Ereignis-getriggerte Datenverarbeitung

Hierbei erfolgt eine Verarbeitung der PMU-Daten nur dann, wenn diese selbst und/oder von diesen abgeleitete Größen eine signifikante Änderung über der Zeit zeigen, die für ein mögliches Netzereignis als charakteristisch erachtet wird. Der Vorteil liegt dabei in einer geringen System-Auslastung; von möglicherweise gewissem Nachteil ist, dass z. B. bei ungünstiger Parametrierung der Ereignis-Erkennung oder auch bei besonderen Bedingungen, wie sie durch den Ausfall der PMUs in elektrischer Nähe des Ereignisses gegeben sind, tatsächlich aufgetretene Netzereignisse nicht zu einer Auslösung der weiteren Datenverarbeitung führen und daher womöglich nicht als solche erkannt werden.

Zyklisch getriggerte Datenverarbeitung

Die Verarbeitung der vorzugsweise von einem in dem Ereignisanalysemodul 122 angeordneten oder diese bildenden Phasenzeigerdatensammler PDC (fachsprachlich auch "phasor data collector" genannt) für eine Datenverarbeitung bereitgestellten PMU-Daten erfolgt vorzugsweise mit jedem neuen Zeitstempel. Der zeitliche Abstand kann bei einheitlicher PMU-Zyklusrate (PMU reporting rate) dieser nativen Rate selbst, bei unterschiedlichen PMU-Zyklusraten einer vom PDC berechneten Rate entsprechen.

Bei dem Verfahren erfolgt vorzugsweise ein ständiger Vergleich der aktuellen Messwerte sowie von aus diesen Werten berechneten Größen mit den entsprechenden Werten der verschiedenen Referenzen, wodurch eine größtmögliche Sicherheit in der Detektion eines Ereignisses gewährleistet wird. Hierfür ist insgesamt eine höhere Systemleistung gegenüber der Ereignis-getriggerten Datenverarbeitung erforderlich; diese kann jedoch durch einen entsprechenden Ausbau der Hardware, der von dem hier beispielhaft vorgeschlagenen Verfahren aufgrund der hohen Parallelisierbarkeit seiner einzelnen Verarbeitungsschritte unmittelbar unterstützt wird (siehe auch weiter unten im Abschnitt "Parallelisierung"), erreicht werden.

Datenverarbeitung

Kenngrößen

Aus den gemessenen PMU-Daten und für die jeweilige Referenz erzeugten Simulations-Daten werden vorzugsweise zunächst physikalisch vom Anwender auf Basis seiner technisch-physikalischen Kenntnis für interpretierbare Kenngrößen KG Kenngrößenwerte (auch KG-Werte genannt) erzeugt. Hierbei kann es sich um stationsgebundene, auf eine einzelne PMU bezogenen KG-Werte oder stationsübergreifend ermittelte KG-Werte handeln.

Für die stationsgebundenen Kenngrößen vorgeschlagen werden hier ohne Beschränkung der Allgemeinheit die Amplituden von Strom und Spannung aller drei Phasen, jeweils für Spannung und Strom die Phasenwinkel-Differenzen der verschiedenen Phasen untereinander sowie die Leistungswinkel einer jeden Phase. Weiterhin vorgeschlagen werden die aus den Zeigerdaten ableitbaren symmetrischen Komponenten des Mit-, Gegen- und Nullsystems, Wirk- und Blindleistung sowie Frequenz und deren Änderungsrate, sofern nicht die zugehörigen PMU-Analogwerte Verwendung finden.

Als stationsübergreifende Kenngrößen vorgeschlagen werden hier ohne Beschränkung der Allgemeinheit die Phasenwinkel-Differenzen aller Phasen sowie die entsprechenden symmetrischen Komponenten für die Strom- und Spannungs-Zeigerwerte von jeweils zwei PMUs.

Aus den im Auswertungs-Bereich liegenden PMU-Messwerten werden im gleichen Zeitraum die verschiedenen KG-Werte gebildet und mit den entsprechenden KG-Werten der jeweiligen Referenzen verglichen. Als Ergebnis des Vergleichs resultiert für jedes Referenz-Ereignis eine nachfolgend als Ähnlichkeit bezeichnete Größe, die eine Aussage darüber liefert, ob und in welchem Maß die gemessenen Daten der jeweiligen Referenz entsprechen.

Erzeugung und Aufbereitung von Kenngrößen-Werten

Hierzu werden zunächst für eine gegebene PMU und für jede zugehörige Kenngröße sowohl für die aktuelle Messung als auch für die jeweilige Referenz der stationäre Wert $A_{stat}^{act/ref}$ vor dem Ereignis anhand der im stationären Bereich liegenden KG-Werte bestimmt (z. B. durch Mittelung derselben), um hieraus den stationären Offset $\Delta A_{stat}$ zwischen Messung und Referenz zu bestimmen, wie er sich unter anderem als Folge der seit Erzeugung der aktuell gültigen Referenzen erfolgten Änderung des Netzzustandes eingestellt hat.

$$\Delta A_{stat} = A_{stat}^{\ act} - A_{stat}^{\ ref}$$

mit

$A_{stat}^{act}$      stationärer KG-Wert der Messung und

$A_{stat}^{ref}$      stationärer KG-Wert der Referenz

Für einen korrekten Bezug der Kenngrößen wird vorzugsweise nachfolgend für jeden Zeitpunkt i im Auswertungs-Bereich der Offset $\Delta A_{stat}$ zu den ursprünglichen KG-Werten $\Delta A_i^{ref}$ der jeweiligen Referenz addiert.

$$A_i^{ref} \rightarrow A_i^{ref} + \Delta A_{stat}$$

Anschließend werden die einzelnen KG-Werte $\Delta A_i^{act/ref}$ von Messung und Referenz vorzugsweise innerhalb des Ereignis-Bereiches auf den ihnen gemeinsamen Werte-Bereich [0...1] normiert:

$$\lambda_i^{act/ref} = \frac{A_i^{act/ref} - A_{min}^{act^\wedge ref}}{A_{max}^{act^\wedge ref} - A_{min}^{act^\wedge ref}}$$

mit

$A_i^{act/ref}$ : KG-Wert aus Messung bzw. Referenz zum i-ten Zeitstempel,
$A_{min/max}^{act^\wedge ref}$ : minimaler bzw. maximaler gemeinsamer KG-Wert aus Messung und Referenz im Ereignis-Bereich und
$\lambda_i^{act/ref} \in [0...1]$

Die Figur 2 zeigt beispielhaft den Verlauf einer Kenngröße KG bzw. der KG-Werte und der zugeordneten Referenz RW über der Zeit t.

Kenngrößen-spezifische Ähnlichkeit

Nachfolgend werden die durch eine spezifische Funktion f erfassten Unterschiede zwischen den aus Messung und jeweiliger Referenz erhaltenen Kenngrößen vorzugsweise jeweils durch einen Zeitstempel-spezifischen Faktor $w_i$ gewichtet, über alle Zeitstempel i des Ereignis-Bereiches aufsummiert und ergeben die für die betrachtete Kenngröße einer gegebenen PMU spezifische Ähnlichkeit:

$$\sigma^\kappa = \frac{\sum_i^n w_i \cdot f\left(\lambda_i^{act}, \lambda_i^{ref}\right)}{\sum_i^n w_i} \qquad (1)$$

mit

$w_i$ : Gewichtung der Kenngröße einer gegebenen PMU zum i-ten Zeitpunkt,
$f(\lambda_i^{act}, \lambda_i^{ref})$: funktionaler Unterschied der KG-Werte aus Messung und Referenz zum i-ten Zeitpunkt,

$$w_i \in [0...1]$$

und

$$\sigma^k \in [0...1]$$

Die sogenannte Ähnlichkeits-Funktion f bildet zu gegebenem Zeitstempel i den Unterschied zwischen den jeweiligen KG-Werten von Messung und Referenz ab und wird hier ohne Beschränkung der Allgemeinheit als Absolut-Wert ihrer Differenz zu einer beliebig wählbaren Potenz x vorgeschlagen:

$$f\left(\lambda_i^{\ act},\lambda_i^{\ ref}\right)=\left(\left|\lambda_i^{\ act}-\lambda_i^{\ ref}\right|\right)^x$$

Für die Wahl von x=1 ergibt sich damit im Übrigen ein einfacher linearer Zusammenhang.

Die mit dieser Ähnlichkeits-Funktion f multiplizierte, für jeden Zeitstempel charakteristische Gewichtung $w_i$ setzt sich aus einem zeitabhängigen Teil $w_i^t$ und einem amplitudenabhängigen Teil $w_i^a$ wie folgt zusammen:

$$w_i = w_i^{\ t} \cdot w_i^{\ a}$$

Der zeitabhängige Anteil $w_i^t$ berücksichtigt dabei die Tatsache, dass aufgrund verschiedener Unsicherheiten in der Netzmodellierung die durch Simulation erzeugten Referenzen mit zunehmendem zeitlichen Abstand vom Eintritt des Ereignisses eine steigende Ungenauigkeit gegenüber den gemessenen Werten aufweisen.

Die resultierende Gewichtungsfunktion beschreibt daher einen über der Zeit fallenden Verlauf. Im einfachsten Fall ist dieser Verlauf linear und kann in der hier betrachteten, zeitdiskreten Form wie folgt dargestellt werden:

$$w_i^{\ t} = 1 - \left(1-c\right) \cdot \frac{i}{n} \qquad \mathtt{mit} \qquad c \in \left[0...1\right]$$

Hierbei ist i der laufende Index des Zeitstempels der aufeinanderfolgenden Werte, beginnend mit dem Anfang des Ereignis-Bereiches, n ist die Gesamtzahl der KG-Werte in diesem Bereich und c ist der Gewichtungsfaktor am Ende des Bereiches.

Für eine bessere Wiedergabe der tatsächlichen Abweichungen kann vorzugsweise ein quadratischer Verlauf der GewichtungsFunktion

$$w_i^{\ t} = 1 - 2 \cdot \left(1-c\right) \cdot \frac{i}{n} + \left(1-c\right) \cdot \left(\frac{i}{n}\right)^2 \qquad \mathtt{mit} \qquad c \in \left[0...1\right]$$

oder ein exponentieller Verlauf derselben zugrunde gelegt werden: $w_i^{\ t} = e^{\frac{i}{n}\ln(c)}$ mit c ∈ ]0...1] In allen drei genannten Fällen ist der Verlauf der Gewichtungsfunktion im Grenzfall c=1 konstant.

Die amplitudenabhängige Gewichtung $w_i^a$ berücksichtigt, dass gleiche KG-Werte aus Messung und Referenz bei großer Amplitude ein deutlicherer Hinweis auf Übereinstimmung sind als im Fall kleiner Amplituden; zeigt z. B. das aktuelle Signal im vorderen Teil eine hohe Amplitude, die im hinteren Teil wieder auf den stationären Wert vor dem Ereignis abgefallen ist, wird auf diese Weise verhindert, dass sowohl die eigentlich passende Referenz als auch eine solche, die im gesamten Verlauf keinerlei Veränderung gegenüber dem stationären Wert aufweist, für den hinteren Signalbereich einen gleich starken Beitrag zur resultierenden Überlappung liefern. In allgemeiner Form hat die Amplituden-abhängige Gewichtung daher die folgende Form:

$$w_i^{\ a} = \left(\frac{\max\left(\Delta A_i^{\ act}, \Delta A_i^{\ ref}\right)}{\max\left(\Delta A_{\max}^{\ act}, \Delta A_{\max}^{\ ref}\right)}\right)$$

mit

$\Delta A_i^{act/ref}$ : absolute Differenz von KG-Wert aus Messung bzw. Referenz und stationärem Wert zum i-ten Zeitstempel, $\Delta A_{\max}^{act/ref}$ : Maximalwert der absoluten Differenz der KG-Werte aus Messung bzw. Referenz und stationärem KG-Wert im gesamten Ereignis-Bereich und

$$w_i^{\ a} \in \left[0...1\right]$$

Auf die beschriebene Weise wird für jede Kenngröße einer jeden PMU ermittelt, welche Referenz durch den Verlauf der zugehörigen Daten mit welcher Ähnlichkeit wiedergegeben wird; dies erlaubt eine, im Hinblick auf eine optimale Konfiguration des Gesamtsystems wichtige, detaillierte Analyse der einzelnen Beiträge zum Gesamt-Ergebnis.

PMU-spezifische Ähnlichkeit

Anschließend werden für jede PMU p vorzugsweise die für alle m Kenngrößen erhaltenen Ähnlichkeiten wie folgt gewichtet aufsummiert:

$$\sigma_p^{PMU} = \frac{\sum_j^m w_j^{\kappa\_stat} \cdot w_{j,p}^{\kappa\_dyn} \cdot \sigma_{j,p}^{\kappa}}{\sum_j^m w_j^{\kappa\_stat} \cdot w_{j,p}^{\kappa\_dyn}} \quad (2)$$

mit

$w_j^{\kappa\_stat}$ : statische Gewichtung Kenngröße j,
$w_{j,p}^{\kappa\_dyn}$ : dynamische Gewichtung der Kenngröße j zur PMU p,
$\sigma_{j,p}^{\kappa}$ : Ähnlichkeit für gegebene Kenngröße j und PMU p gemäß Gleichung (1),

$$w_j^{\kappa\_stat} \in [0...1],$$

$$w_{j,p}^{\kappa\_dyn} \in [0...1],$$

$$\sigma_p^{PMU} \in [0...1]$$

und

$$\sigma_{j,p}^{\kappa} \in [0...1]$$

Hierbei berücksichtigt die statische, vom Anwender einstellbare Gewichtung $w_j^{\kappa\_stat}$, dass die verschiedenen Kenngrößen eine unterschiedliche Aussagekraft bei verschiedenen Ereignissen besitzen. Diese Form der Gewichtung erlaubt es dem Anwender, spezifische Kenntnisse über die Charakteristika von Ereignissen in seinem Netz einzubringen und z. B. solche Kenngrößen, die sehr charakteristisch für die jeweiligen Vorgänge sind, stärker zu gewichten, dahingegen solche, die für verschiedene Ereignisse vergleichbare oder nicht eindeutige Resultate liefern, weniger stark zu gewichten; so zeigt z. B. für einen Kurzschluss auf einer Leitung der zeitliche Verlauf der Stromamplitude im Ereignis-Bereich deutlich charakteristischere Veränderungen als der entsprechende Verlauf der Netzfrequenz, die sich aufgrund der Massenträgheit der beteiligten Erzeuger (rotierende Generatoren) nur vergleichsweise langsam ändert.

Der dynamische Gewichtungsanteil $w_{j,p}^{\kappa\_dyn}$ berücksichtigt, dass zu einem gegebenen Ereignis Messdaten von PMUs, deren Höhe sich z. B. aufgrund der elektrischen Entfernung zum Ereignis-Ort weniger stark infolge des Ereignisses ändern, hohe Ähnlichkeiten zu allen Referenzen aufweisen, die für diese PMUs ebenfalls nur eine geringe Signaländerung beobachten, auch hier z. B. infolge größerer elektrischer Entfernung zum jeweiligen Ereignis. Um zu verhindern, dass hierdurch nicht zu diesem Ereignis gehörige Referenzen hohe Ähnlichkeiten liefern, wird hier vorgeschlagen, die Ergebnisse solcher Vergleiche geringer zu gewichten, die für die Kenngrößen sowohl der Mess- als auch der Referenzen nur geringe Änderungen im Ereignis-Zeitraum zeigen. In einer möglichen vorteilhaften Implementierung dieser dynamischen Gewichtung $w_{j,p}^{\kappa\_dyn}$ sind diese Änderungen auf die maximalen Änderungen der gleichen Kenngrößen im Ereignis-Bereich bei Zugrundelegung aller Referenzen für die betrachtete Kenngröße und PMU bezogen:

$$w^{\kappa\_dyn} = \frac{A_{max}^{act^\wedge ref} - A_{min}^{act^\wedge ref}}{A_{max\_total}^{act^\wedge ref} - A_{min\_total}^{act^\wedge ref}} \quad (3)$$

mit

$A_{\text{min/max}}^{act^\wedge ref}$ : minimaler bzw. maximaler gemeinsamer KG-Wert aus Messung und Referenz im Ereignis-Zeitraum zu gegebener Kenngröße und PMU,

$A_{\text{min\_total/max\_total}}^{act^\wedge ref}$ : minimaler bzw. maximaler gemeinsamer KG-Wert aus Messung und Referenz im Ereignis-Zeitraum zu gegebener Kenngröße und PMU unter Berücksichtigung aller Referenz-Ereignisse und

$$w^{\kappa\_dyn} \in \big[0...1\big]$$

Die Größen $A_{\text{max}}^{act^\wedge ref}$ bzw. $A_{\text{min}}^{act^\wedge ref}$ und $A_{\text{max\_total}}^{act^\wedge ref}$ bzw. $A_{\text{min\_total}}^{act^\wedge ref}$ sind dabei vorzugsweise auf den zugehörigen Nominalwert bezogen. Alternativ hierzu können die Änderungen auch auf einen festgelegten Wertebereich bezogen sein; im Fall der auf Winkeldifferenzen basierenden Kenngrößen würde dieser den maximal genutzten Winkelbereich von [-180°...+180°] umfassen.

Resultierende Ähnlichkeit von Messung und Referenz

Für die Ermittlung der resultierenden Ähnlichkeit eines gemessenen Signals gegenüber einer gegebenen Referenz wird abschließend vorzugsweise der gewichtete Mittelwert über die jeweiligen Ähnlichkeiten aller N PMUs p gebildet:

$$\sigma^{ref} = \frac{\sum_{p}^{N} w_{p}^{PMU} \cdot \sigma_{p}^{PMU}}{\sum_{p}^{N} w_{p}^{PMU}} \qquad (4)$$

mit

$w_{p}^{PMU}$ : Gewichtung der PMU p,
$\sigma_{p}^{PMU}$ : Ähnlichkeit für PMU p gemäß Gleichung (2),

$$\sigma^{ref} \in \big[0...1\big],$$

$$\sigma_{p}^{PMU} \in \big[0...1\big] \text{ und}$$

$$w_{p}^{PMU} \in \big[0...1\big]$$

Die Gesamt-Gewichtung $w_{p}^{PMU}$ der PMU p setzt sich vorzugsweise aus verschiedenen Teilgewichtungen wie folgt zusammen:

$$w_{p}^{PMU} = w_{p}^{PMU\_stat} \cdot w_{p}^{PMU\_qual} \cdot w_{p}^{PMU\_dyn}$$

mit

$w_{p}^{PMU\_stat}$ : statischer Gewichtungsfaktor,
$w_{p}^{PMU\_qual}$ : qualitätsbezogener Gewichtungsfaktor,
$w_{p}^{PMU\_dyn}$ : dynamischer Gewichtungsfaktor,

$$w_{p}^{PMU} \in \big[0...1\big],$$

$$w_p^{PMU\_stat} \in [0...1],$$

$$w_p^{PMU\_qual} \in [0...1]$$

und

$$w_p^{PMU\_dyn} \in [0...1]$$

Die in der Konfiguration hinterlegte statische Gewichtung $w_p^{PMU\_stat}$ erlaubt dem Anwender, den Beitrag der einzelnen PMU an der Erkennung festzulegen. Ist z. B. die PMU-Dichte als Folge einer großen Zahl installierter PMUs in einem vergleichsweise kleinen elektrischen Bereich sehr hoch, liegt infolge der gegebenen Redundanz eine unerwünschte Vervielfältigung der von dort gelieferten elektrischen Informationen vor; einer infolge der überproportionalen Berücksichtigung dieses elektrischen Bereiches möglichen Verfälschung des Ergebnisses kann dann durch eine entsprechend niedrige statische Gewichtung der dort installierten PMUs entgegengewirkt werden. Ein anderer möglicher Anlass für verschiedene statische Gewichtungen von PMUs ist bei unterschiedlicher Reporting Rate der beteiligten PMUs gegeben. So kann vorteilhaft aufgrund der höheren zeitlichen Signalauflösung für eine PMU mit höherer Reporting Rate ein größerer Wert für die statische Gewichtung gewählt werden, für eine solche mit geringerer Reporting Rate ein kleinerer Wert.

Die qualitätsbezogene Gewichtung $w_p^{PMU\_qual}$ ist das Ergebnis der Auswertung der Qualitätsinformation der zu verarbeitenden Messdaten; in der vorliegend beschriebenen beispielhaften Ausführung ist dies die logische UND-Verknüpfung der Fehlerstati der vom PDC bereitgestellten PMU-Messwerte aller Messkanäle im gesamten Auswertungs-Bereich:

$$w_p^{PMU\_qual} = \begin{cases} 1, & o.k. \\ 0, & error \end{cases} \qquad (5)$$

Sind damit z. B. Teile der Daten eines PMU-Kanals innerhalb des Auswertung-Bereiches als ungültig oder fehlend markiert, wird in der Folge die zugehörige PMU in der laufenden Auswertung vorzugsweise nicht weiter berücksichtigt.

Der dynamische Gewichts-Anteil $w_p^{PMU\_dyn}$ ergibt sich dabei vorzugsweise wie folgt:

$$w_p^{PMU\_dyn} = \frac{\sum_{j=1}^{N_\kappa} w_j^{\kappa\_dyn}}{N_\kappa} \qquad (6)$$

mit

$w_j^{\kappa\_dyn}$ : dynamische Gewichtung der Kenngrößen j gemäß Gleichung (3),
$N_\kappa$ : Anzahl der verwendeten Kenngrößen je PMU und

$$w_j^{\kappa\_dyn} \in [0...1]$$

Eine hinreichend geringe Ähnlichkeit $\sigma^\kappa$ gemäß Gleichung (1) einer einzelnen oder einiger weniger Kenngrößen kann bereits ein deutlicher Hinweis darauf sein, dass eine Referenz trotz sehr guter Überlappung der übrigen Kenngrößen nicht dem aktuell erfassten Signal entspricht. Findet z. B. auf einer bestimmten Leitung ein Kurzschluss statt, kann für eine unmittelbar benachbarte Leitung der zeitliche Verlauf einer überwiegenden Zahl der aus den dort gemessenen Daten erhaltenen Kenngrößen durchaus ähnlich sein, die Polarität des Kurzschluss-Stromes, wie sie sich unter anderem im Leistungswinkel wiederfindet, jedoch entgegengesetzt. Zur Berücksichtigung solcher Effekte wird für den Fall, dass der für die Ähnlichkeit $\sigma^\kappa$ erhaltene Wert für eine solche Kenngröße daher unter einem vom Anwender vorgegebenen Grenzwert $\sigma^\kappa_{min}$ liegt, vorzugsweise die Ähnlichkeit $\sigma_p^{PMU}$ der betrachteten PMU auf den minimalen Wert 0 gesetzt, das zugehörige dynamische Gewicht $w_p^{PMU\_dyn}$ hingegen, unter Nichtanwendung des in Gleichung (6) gezeigten Ausdrucks, auf den maximalen Wert 1. Auf diese Weise wird in vorteilhafter Weise erreicht, dass diese PMU in der laufenden Auswertung in der größtmöglichen Weise dazu beiträgt, den Vergleich mit der aktuellen Referenz als nicht übereinstimmend zu bewerten und das Gesamtergebnis dahingehend entscheidend zu beeinflussen.

Stationsübergreifende Auswertungen

Infolge eines Ereignisses erfolgen für jede Phase an jedem elektrischen Ort mehr oder weniger ausgeprägte Veränderungen des Phasenwinkels von Strom und/oder Spannung gegenüber dem stationären Zustand. Als Folge ergeben sich zwischen verschiedenen elektrischen Orten für einen solchen Vorgang charakteristische Veränderungen der Phasenwinkeldifferenz einer jeden Phase.

Dieser Effekt wird vorzugsweise dadurch berücksichtigt, dass die Phasenwinkeldifferenz von Spannung und/oder Strom ausgewählter PMU-Paare für jede Phase ermittelt und mit den zugehörigen KG-Werten der verschiedenen Referenzen verglichen wird. Die Ergebnisse dieser Auswertung berücksichtigen damit nicht allein die jeweiligen lokalen elektrischen Informationen, sondern beinhalten darüber hinaus die für die jeweilige Referenz charakteristischen Folgen elektrischer Interaktion zwischen diesen Orten.

Analog zu Gleichung (2) werden für jedes PMU-Paar pp vorzugsweise die für alle nn PMU-Paar-spezifischen Kenngrößen erhaltenen Ähnlichkeitsmaße wie folgt gewichtet summiert:

$$\sigma_{pp}^{2PMU} = \frac{\sum_j^{mm} w_j^{\kappa\_stat} \cdot w_{j,pp}^{\kappa\_dyn} \cdot \sigma_{j,pp}^{\kappa}}{\sum_j^{mm} w_j^{\kappa\_stat} \cdot w_{j,pp}^{\kappa\_dyn}} \qquad (7)$$

mit

$w_j^{\kappa\_stat}$ : statische Gewichtung der Kenngrößen j,

$w_{j,pp}^{\kappa\_dyn}$ : dynamische Gewichtung der Kenngrößen j zum PMU-Paar pp,

$\sigma_{j,pp}^{\kappa}$ : Ähnlichkeit für gegebene Kenngrößen j und PMU-Paar pp gemäß Gleichung (1),

$$\sigma_{pp}^{2PMU} \in [0...1],$$

$$w_j^{\kappa\_stat} \in [0...1],$$

$$w_{j,pp}^{\kappa\_dyn} \in [0...1] \quad \text{und}$$

$$\sigma_{j,pp}^{\kappa} \in [0...1]$$

In Erweiterung der Gleichung (4) ergibt sich dann unter Berücksichtigung der zusätzlichen, stationsübergreifenden NN PMU-Paare der folgende Ausdruck für die Ähnlichkeit zu einer gegebenen Referenz:

$$\sigma^{ref} = \frac{\sum_p^{N} w_p^{PMU} \cdot \sigma_p^{PMU} + \sum_{pp}^{NN} w_{pp}^{2PMU} \cdot \sigma_{pp}^{2PMU}}{\sum_p^{N} w_p^{PMU} + \sum_{pp}^{NN} w_{pp}^{2PMU}}$$

mit

$w_p^{PMU}$ : Gewichtung der PMU p,

$\sigma_p^{PMU}$ : Ähnlichkeit für PMU p gemäß Gleichung (2),

$w_{pp}{}^{2PMU}$ : Gewichtung des PMU-Paares pp,
$\sigma_{pp}{}^{2PMU}$ : Ähnlichkeit für PMU-Paar pp gemäß Gleichung (7),

$$\sigma^{ref} \in \left[0...1\right],$$

$$w_p{}^{PMU} \in \left[0...1\right],$$

$$\sigma_p{}^{PMU} \in \left[0...1\right],$$

$$w_{pp}{}^{2PMU} \in \left[0...1\right]$$

$$\sigma_{pp}{}^{2PMU} \in \left[0...1\right]$$

Analog zu den PMUs setzt sich vorzugsweise auch hier die Gesamt-Gewichtung $\sigma_{pp}{}^{2PMU}$ für ein PMU-Paar pp aus verschiedenen Teilgewichtungen zusammen:

$$w_{pp}{}^{2PMU} = w_{pp}{}^{2PMU\_stat} \cdot w_{pp}{}^{2PMU\_qual} \cdot w_{pp}{}^{2PMU\_dyn}$$

mit

$w_{pp}{}^{2PMU\_stat}$ : statische Gewichtung,
$w_{pp}{}^{2PMU\_qual}$ : qualitäts-abhängige Gewichtung,
$w_{pp}{}^{2PMU\_dyn}$ : dynamische Gewichtung,

$$w_{pp}{}^{2PMU} \in \left[0...1\right],$$

$$w_{pp}{}^{2PMU\_stat} \in \left[0...1\right],$$

$$w_{pp}{}^{2PMU\_dyn} \in \left[0...1\right]$$

und

$$w_{pp}{}^{2PMU\_qual} \in \left[0,1\right]$$

Die vom Anwender definierte statische Gewichtung $w_{pp}{}^{2PMU\_stat}$ sollte vorzugsweise nicht einfach automatisch als Funktion der jeweiligen vorhandenen statischen Gewichtung der beiden beteiligten PMUs gebildet werden (z. B. als Produkt derselben), da z. B. eine PMU-spezifische Redundanz nicht für zugehörige, ausgewählte PMU-Paare gilt, solange sich aus einer Definition derselben nicht ebenfalls eine Redundanz ergibt. So kann z. B. bei Auswahl von PMU-Paaren, die paarweise elektrisch weit auseinander liegende Leitungen messen, der zugehörige statische Gewichtungsfaktor jeweils einen hohen Wert erhalten, wohingegen z. B. bei Auswahl von PMU-Paaren, die parallel verlaufende Leitungen messen, dieser aus Redundanzgründen jeweils einen niedrigeren Wert zugewiesen bekommen kann. Ein weiterer möglicher Anlass für verschiedene statische Gewichtungen von PMU-Paaren ist, ähnlich wie im Fall der Kenngrößenberechnung für eine einzelne PMU, bei unterschiedlicher Reporting Rate der beteiligten PMUs gegeben. So kann vorteilhaft z. B. ein größerer Wert für die statische Gewichtung von PMU-Paaren gewählt werden, deren beide beteiligte PMUs eine vergleichsweise hohe Reporting Rate besitzen, und ein entsprechend kleinerer Wert für eben solche PMU-Paare, deren beteiligte PMUs durch eine vergleichsweise geringe Reporting Rate charakterisiert sind.

Die qualitätsbezogene Gewichtung $w_{pp}{}^{2PMU\_qual}$ ergibt sich vorzugsweise als Produkt der gemäß Gleichung (5) definierten Signal-Qualitäten der beiden zugehörigen PMUs p1 und p2 wie folgt:

$$w_{pp}^{2PMU\_qual} = w_{p_1}^{PMU\_qual} \cdot w_{p_2}^{PMU\_qual}$$

mit

$$w_{pp}^{2PMU\_qual} \in \left[0,1\right]$$

Damit wird ein PMU-Paar von der weiteren Verarbeitung ausgeschlossen, sobald die Signal-Qualität einer der beiden beteiligten PMUs den Wert 0 besitzt.

Der dynamische Anteil $w_{pp}^{2PMU\_dyn}$ berücksichtigt wie auch im Fall einer einzelnen PMU den Effekt, dass bei sonst hohen Ähnlichkeiten der verschiedenen Kenngrößen auch hier eine hinreichend geringe Ähnlichkeit vereinzelter Kenngrößen ein Hinweis auf Nicht-Übereinstimmung mit einer Referenz sein kann. So wäre zu erwarten, dass im Fall eines Kurzschlusses auf einer Leitung das Paar der an deren jeweiligem Ende angeschlossen PMUs trotz vielleicht sonst überwiegend ähnlichen KG-Verlaufs die Differenz der Stromwinkel zumindest der betroffenen Phasen einen signifikant anderen Verlauf aufweist als im Fall eines Kurzschlusses auf einer unmittelbar benachbarten Leitung. Liegt der Ähnlichkeits-Wert $\sigma_\kappa$ einer solchen Kenngröße daher unterhalb eines vorgegebenen Grenzwertes $\sigma^\kappa_{min}$, wird vorzugsweise der dynamische Gewichts-Anteil $w_{pp}^{2PMU\_dyn}$ des betrachteten PMU-Paares pp, analog zum Vorgehen für eine einzelne PMU, auf den Maximalwert 1 gesetzt, die Ähnlichkeit $\sigma_{pp}^{2PMU}$ für dieses PMU-Paar hingegen auf den Minimalwert 0. Auf diese Weise wird in vorteilhafter Weise erreicht, dass das PMU-Paar pp in der laufenden Auswertung in der größtmöglichen Weise dazu beiträgt, den Vergleich mit der aktuellen Referenz als nicht übereinstimmend zu bewerten und das Gesamtergebnis dahingehend entscheidend zu beeinflussen.

Berücksichtigung von Schalthandlungen

Wird mindestens eine Phase einer Leitung infolge eines erkannten Fehlers abgeschaltet, sinkt der Wert des von einer dort installierten PMU erfassten Stromes auf einen Minimalwert ab; abhängig von der Anordnung der Messpunkte in Bezug auf einen Leistungsschalter am Leitungsende wird ergänzend für die Spannung entweder ein Sprung auf den stationären Wert (Sammelschienen-Seite) oder ein vollständiger Abfall derselben (Leitungs-Seite) beobachtet.

Wenn dieser Vorgang innerhalb des Ereignis-Zeitraums erfolgt und hierzu nur solche Referenzen vorliegen, in denen kein Abschaltzeitpunkt definiert ist oder dieser nicht hinreichend gut mit dem tatsächlichen Zeitpunkt übereinstimmt, ist die aus einem Vergleich resultierende Ähnlichkeit aufgrund der Abweichungen im Verlauf der KG-Werte gegenüber der zugehörigen Referenz in dem der Abschaltung nachfolgenden Zeitbereich erwartungsgemäß signifikant verschlechtert und das tatsächliche Ereignis wird möglicherweise nicht oder nicht mit hinreichender Sicherheit erkannt.

Vorteilhaft ist es, wenn abhängig von der Anordnung der Messpunkte die Veränderung von Spannung und/oder Strom als Kriterium dafür verwendet wird, den Zeitpunkt einer solchen Abschaltung zu erkennen und die KG-Werte der Messung und aller (!) Referenzen für alle(!) PMUs im Ereignis-Bereich, beginnend mit diesem Zeitpunkt, für den Vergleich in der folgenden Weise nicht zu berücksichtigen: Wird die Spannung auf der Leitungsseite gemessen, wird hier der Abfall der Spannungsamplitude unter eine vorgegebene Schwelle als zu verwendendes Kriterium für das Erkennen einer Abschaltung vorgeschlagen (statische Bedingung); liegt dahingegen der Messpunkt auf der Sammelschienen-Seite, wird vorgeschlagen, die Änderung der Stromamplitude auf einen Wert hinreichend unterhalb des stationären, vor Eintritt des Ereignisses gültigen Wertes als ein solches Kriterium zu verwenden (dynamische Bedingung) .

Lernende Netze zur Ermittlung der Ähnlichkeit von Kenngrößen-Verläufen:

In einer anderen als besonders vorteilhaft angesehenen Ausführungsvariante ist vorgesehen, für die Ermittlung der kenngrößenspezifischen Ähnlichkeiten $\sigma_j^\kappa$ einer Kenngröße j aus den Zeitverläufen dieser Kenngröße anstelle des im obigen Abschnitt "Kenngrößen-spezifische Ähnlichkeit" beschriebenen Verfahrens oder zusätzlich zu diesem ein auf Grundlage lernender Netze (Stichwort "machine learning") basierendes Verfahren zu verwenden, bei dem die Zeitreihen bzw. Zeitverläufe einer Kenngröße als Eingangssignal für ein entsprechendes lernendes Netz [zu unterscheiden von dem hier ebenfalls betrachteten elektrischen Energieversorgungsnetz 20 gemäß Figur 1] dienen.

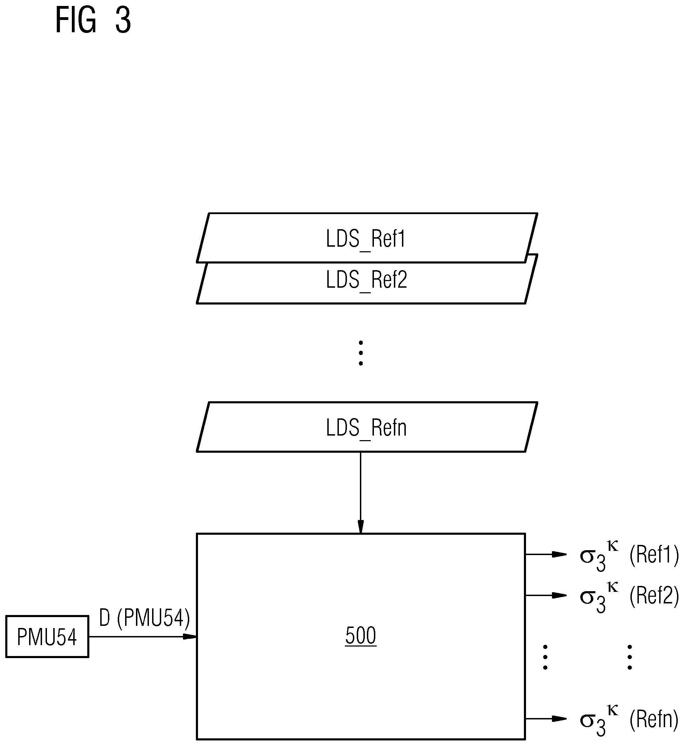

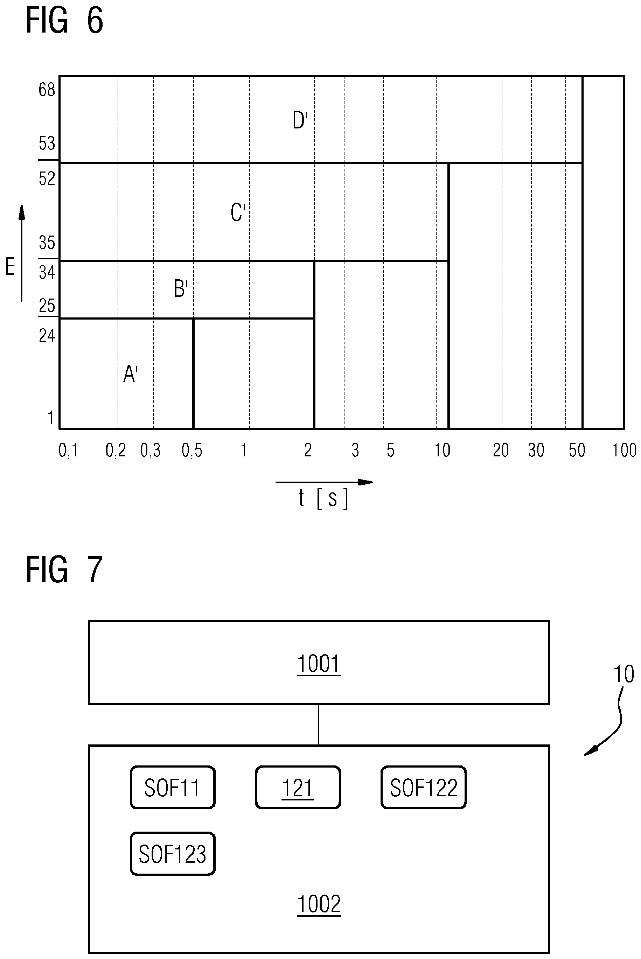

Die Figur 3 zeigt dies beispielhaft anhand eines lernenden Netzes 500, das für eine Kenngröße KG3 trainiert ist bzw. trainiert wird. Bei der Kenngröße KG3 kann es sich beispielsweise um die Stromamplitude der dritten Phase eines dreiphasigen elektrischen Energieversorgungsnetzes 20 gemäß Figur 1 handeln. Die zu der Kenngröße KG3 gehörenden Messdaten D(PMU54) werden beispielsweise von einem Phasenzeigermessgerät PMU54 gemessen. Das lernende Netz 500 wird vorzugsweise von einem oder mehreren entsprechend programmierten Computern oder Computersystemen - nachfolgend kurz Rechner genannt - gebildet, beispielsweise von dem Rechner 1001 gemäß Figur 7.

In einer ersten hier vorgeschlagenen, statisch lernenden Variante wird das lernende Netz 500 zunächst einmalig mit den n Zeitverläufen LDS_Ref1, LDS_Ref2,..., LDS_Refn der jeweiligen Kenngröße KG3 für die verschiedenen elektrischen Netzereignisse angelernt, die unter Annahme definierter Netzzustände (Leistungsflüsse, Schaltzustände, Spannungsverteilung,...) simuliert worden sind. Anschließend wird das angelernte Netz 500 mit den zu der Kenngröße KG3 gehörenden Messdaten D(PMU54) des elektrischen Energieversorgungsnetzes 20 gemäß Figur 1 beaufschlagt, um ggf. das Auftreten eines der gelernten bzw. antrainierten Ereignisse zu erkennen. Das Erkennen kann auf der Basis von ereignisbezogenen Ähnlichkeitswerten $\sigma_3{}^\kappa$(LDS_Ref1), $\sigma_3{}^\kappa$(LDS_Ref2),..., $\sigma_3{}^\kappa$(LDS_Refn), die für die Kenngröße KG3 errechnet werden, erfolgen.

In einer zweiten, dynamisch lernenden Variante wird im laufenden Betrieb das in der hier erstgenannten Variante verwendete Verfahren nach jeder für das jeweils aktuelle elektrische Netzabbild erfolgten Aktualisierung der Referenzdaten wiederholt; der Vorteil liegt darin, dass auf diese Weise der Lernvorgang mit weitestgehend genau denjenigen Daten erfolgt, die bei Eintreten eines tatsächlichen Netzereignisses für den dann gültigen elektrischen Netzzustand erwartet werden.

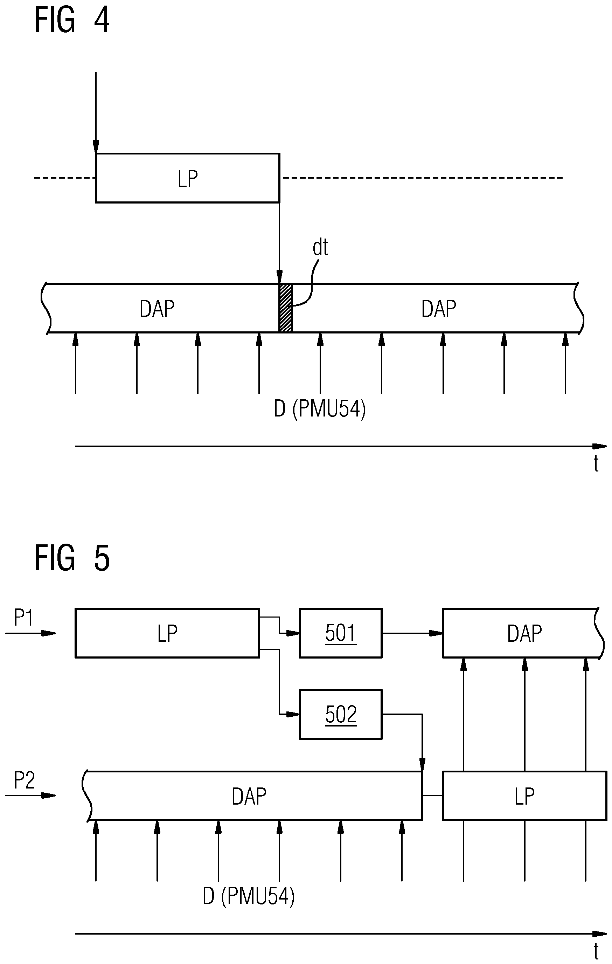

Um auf dem ausführenden Rechner den ungestörten Programmablauf zur Datenanalyse während der Lernphase zu gewährleisten, erfolgt in einem ersten Vorschlag das Anlernen mit den aktuellen Referenzdaten in einem zum jeweiligen Datenanalyse-Prozess DAP parallel ablaufenden Lern-Prozess LP, wie dies beispielhaft die Figur 4 über der Zeit t zeigt. Nach Abschluss der Lernphase wird der Datenanalyse-Prozess DAP dann unter Verwendung der aus dem Lern-Prozess LP resultierenden Ergebnisse neu parametriert. Im Falle einer hinreichend schnellen Übertragung der Lern-Ergebnisse des Lern-Prozesses LP auf den Datenanalyse-Prozess DAP im Zeitfenster dt wird das Entstehen von zeitlichen Phasen verhindert oder zumindest minimiert, in denen der Datenanalyse-Algorithmus blockiert ist.

In einem zweiten, alternativen Vorschlag finden Datenanalyse und Lernvorgang abwechselnd in unterschiedlichen Hauptprozessen statt. Hierzu werden für jedes lernende Netz (bzw. für jede Kenngröße einer jeden PMU) jeweils zwei identische, parallel zueinander laufende Hauptprozesse P1 und P2 wie folgt betrieben (siehe Figur 5): Während der erste Hauptprozess P1 zunächst für die Datenanalyse verantwortlich ist und demgemäß den Datenanalyse-Prozess DAP durchführt, wird im zugehörigen parallelen zweiten Hauptprozess P2 der Lern-Prozess LP durchgeführt, und zwar auf der Basis vorliegender aktueller Referenzdaten und des vorgegebenen Analyse-Algorithmus. Nach Beendigung der Lernphase bzw. des Lern-Prozesses LP im zweiten Hauptprozess P2 wird die Datenanalyse dann - mit Umschaltschritten 501 und 502 - auf diesen zweiten Hauptprozess P2 umgeschaltet und der vorher für die Datenanalyse verantwortliche erste Hauptprozess P1 wird in den Lern-Prozess LP geschaltet und wartet nachfolgend auf die Bereitstellung aktualisierter Referenzdaten für seinen nächstfolgenden Lernvorgang.

Als Ergebnis eines solchen lernenden Netzes erhält man für die spezifische Kenngröße j einer vorgegebenen PMU die kenngrößenspezifische Ähnlichkeit $\sigma_j{}^\kappa$ zwischen Messung und Referenz in einem einzigen Schritt für alle definierten elektrischen Netzereignisse. Im Hinblick auf die erforderliche Performance des ausführenden Rechners wird hierdurch unter Annahme einer maximalen Parallelisierung der Verarbeitungsschritte und unter Berücksichtigung der zeitgleich zur Datenanalyse stattfindenden Lernphase erreicht, dass die Anzahl der im Rechner parallel ablaufenden Prozesse gegenüber dem im Abschnitt Ermittlung der Kenngrößen-spezifischen Ähnlichkeiten beschriebenen Ansatz - linear mit der Anzahl Nref der definierten elektrischen Netzereignisse - um den Faktor Nref/2 reduziert ist.

Weiterverarbeitung der Ergebnisse

Grenzwertvergleich und Ausgabe von Meldungen

Die für die verschiedenen Referenzen erhaltenen Ähnlichkeiten $\sigma$ werden vorzugsweise zunächst mit einem vorgegebenen Grenzwert $\sigma_{alarm}$ verglichen. Wenn eine oder mehrere Referenzen diesen Grenzwert überschreiten,

$$\sigma > \sigma_{alarm} \qquad (8)$$

werden in der Ähnlichkeit darunter liegende Referenzen in der Folge nicht weiter berücksichtigt.

Liegt dabei nur eine einzelne Referenz über diesem Grenzwert, wird vorzugsweise diese unter Vorschlag von hierfür vordefinierten Gegenmaßnahmen als eindeutig erkannt gemeldet.

Liegen mehrere Referenzen mit Ähnlichkeiten oberhalb dieses Grenzwertes $\sigma_{alarm}$ vor und überschreitet dabei der Ähnlichkeits-Abstand zwischen der Referenz mit der höchsten Ähnlichkeit $\sigma_1$ und der Referenz mit der zweithöchsten Ähnlichkeit $\sigma_2$ einen weiteren, relativen Grenzwert $\Delta_{min}$,

$$\frac{\sigma_1}{\sigma_2} > \Delta_{min} \qquad (9)$$

wird vorzugsweise weiterhin die Referenz mit der höchsten Ähnlichkeit unter Angabe geeigneter Gegenmaßnahmen als eindeutig erkannt ausgegeben.

Liegen dahingegen mehrere Referenzen mit Ähnlichkeiten oberhalb dieses Grenzwertes $\sigma_{alarm}$ vor, wobei der Grenzwert $\Delta_{min}$ durch den Ähnlichkeits-Abstand der beiden ähnlichsten Referenzen nicht überschritten wird, werden vorzugsweise alle Referenzen mit Ähnlichkeiten oberhalb des Grenzwertes $\sigma_{alam}$ zusammen mit den jeweils vordefinierten Gegenmaßnahmen in der Reihenfolge abnehmender Ähnlichkeit als mögliche Ereignisse ausgegeben.

Liegt die resultierende Ähnlichkeit für jede Referenz unterhalb des Grenzwertes $\sigma_{alarm}$, wird vorzugsweise nur der Nachweis eines Ereignisses im Netz gemeldet mit dem Hinweis, dass dieses keiner bekannten Referenz zugeordnet werden kann.

In einer hier vorgeschlagenen Variante wird für einen zweiten, tiefer liegenden Ähnlichkeits-Grenzwert $\sigma_{Warn}$ die zuvor beschriebene Prozedur wiederholt. Wird hierbei eine Überschreitung gefunden,

$$\sigma > \sigma_{Warn} \qquad (10)$$

werden die gefunden Ergebnisse in ähnlicher Weise wie vorhergehend beschrieben ausgegeben, optional unter besonderem Hinweis auf eine reduzierte Aussagekraft derselben (qualitative Bewertung der Ergebnisse, siehe weiter unten).

## Qualitative Bewertung der Ergebnisse

Vorzugsweise wird vorgeschlagen, neben den Ergebnissen der Auswertung selbst auch zugehörige Informationen zur Qualität der Ergebnisse zu ermitteln und auszugeben. Vorteilhaft (ohne Beschränkung der Allgemeinheit) kann dies eine dreistufige Bewertung in der Form "Gültig", "Unsicher" und "Ungültig" sein.

Auch kann eine solche Abstufung der Qualität z. B. aufgrund der Nicht-Berücksichtigung einzelner PMUs in der Auswertung infolge schlechter Daten-Qualität derselben (PMU-spezifische Ähnlichkeit, s. o.) erfolgen. Ebenso kann die Verkürzung des Ereignis-Intervalls aufgrund erkannter Schalthandlungen (Berücksichtigung von Schalthandlungen, s. o.) als Anlass genommen werden, die für die Ähnlichkeit erhaltenen Werte qualitativ geringer zu bewerten.

Für eine Reduktion der Qualität der Ergebnisse können vorzugsweise zudem die im vorhergehenden Abschnitt vorgeschlagenen Grenzwerte verwendet werden; so können sowohl Ähnlichkeiten von Referenzen, die zwar die Alarm-Grenze $\sigma_{alarm}$ gemäß Gleichung (8) überschreiten, jedoch gemäß Gleichung (9) nicht hinreichend trennbar von den entsprechenden Werten anderer Referenzen sind, zu einer Qualitäts-Abstufung führen. Auch ein maximaler Ähnlichkeitswert, der zwar die Warngrenze $\sigma_{Warn}$ gemäß Gleichung (10), nicht jedoch die Alarm-Grenze $\sigma_{alarm}$ gemäß Gleichung (8) überschreitet, kann mit einer reduzierten Qualität gekennzeichnet werden.

## Ausgabe von Kontroll- und Steuersignalen

In einer weitergehenden Variante können die Ergebnisse dazu verwendet werden, automatische Schalt- und Regel-Anweisungen für die Komponenten im elektrischen Netz auszugeben; im gewählten konkreten Ausführungsbeispiel werden diese an den PDC gesendet, der diese entweder an das zugehörige Netzleitsystem weiterleitet oder diese eigenverantwortlich ausführt. Im Hinblick auf die Gewährleistung der Sicherheit solcher Zugriffe kommt den vorangehend behandelten Qualitäts-Zuständen eine besondere Bedeutung zu.

## Ereignis-Klassen

Die verschiedenen Referenzen lassen sich im Hinblick auf ihre Ursache in verschiedene Ereignis-Typen und Ereignis-Klassen, wie nachfolgend erörtert, einteilen.

## Typenspezifische Gewichtung von Kenngrößen

Die verschiedenen Kenngrößen sind in unterschiedlicher Weise für die Erkennung verschiedener Ereignis-Typen von Referenzen geeignet. So sind für die Erkennung eines Kurzschlusses z. B. der Verlauf der Stromamplitude und der Phasendifferenz zwischen Strom und Spannung besonders aussagekräftig, wohingegen sich der Ausfall eines großen Generatorblocks ergänzend zu den dortigen Messungen (sofern verfügbar) unter anderem im Verhalten der Netzfrequenz zeigt. Daher wird in einer bevorzugten Variante vorgeschlagen, diesem Verhalten durch eine nach den verschiedenen Ereignis-Typen unterschiedenen Wahl der kenngrößenspezifischen Gewichtungs-Faktoren $w_j^{\kappa\_stat}$ in Gleichung (2) Rechnung zu tragen.

Zeitliche Stufung von Ereignis-Klassen

Die verschiedenen Ereignis-Typen sind teilweise durch eine spezifische Dauer des zugehörigen Ereignisses charakterisiert. Während sich z. B. für einen Kurzschluss eine Auswertezeit von deutlich unterhalb einer Sekunde anbietet, erscheint für einen Generator-Ausfall ein um mindestens eine Größenordnung höher gewählter Zeitraum geeignet.

In einer hier vorgeschlagenen Variante werden daher zunächst durch ihre Ereignisdauer charakterisierte Ereignis-Klassen definiert, die jeweils eine oder mehrere Ereignisse E bzw. Ereignis-Typen beinhalten. Die Ermittlung der Ähnlichkeit für die verschiedenen Ereignisklassen erfolgt dann über in ihrer zeitlichen Länge unterschiedliche Auswertungs-Bereiche, wie dies beispielhaft in der Figur 6 für Ereignisklassen A', B', C' und D' über der Zeit t dargestellt ist.

Bei Ereignis-getriggerter Datenverarbeitung (Auswertungszyklus, siehe oben) erfolgt dann zunächst der KG-Vergleich aller Referenzen aus der Klasse mit der kürzesten Auswertezeit; anschließend wird der Vorgang für die Referenzen der übrigen Klassen in der Reihenfolge wachsender Länge des Auswertungsbereiches wiederholt. Überschreitet hierbei für eine Ereignis-Klasse die Ähnlichkeit mindestens einer Referenz einen vorgegebenen Grenzwert $\sigma_{alarm}$, werden die Ergebnisse direkt ausgegeben und die Bearbeitung der weiteren Klassen abgebrochen; auf diese Weise wird eine möglichst hohe Reaktionszeit erreicht, die eine schnelle Umsetzung von Gegenmaßnahmen ermöglicht.

Bei zyklisch getriggerter Datenverarbeitung (Auswertungszyklus, s. o.) wird die weitere Datenverarbeitung ebenfalls beendet, sobald alle Referenzen einer Klasse mit der Messung verglichen worden sind und der Grenzwert $\sigma_{alarm}$ überschritten wurde. Da die Zykluszeit deutlich unterhalb der Längen der Auswertungs-Bereiche liegt und die Verarbeitung für verschiedene Anfangszeiten des Auswertungsintervalls daher zwangsläufig parallel erfolgt (Parallelisierung, s. u.), ist hier die weitergehende Bedingung für den Abbruch nach Überschreitung des Grenzwertes $\sigma_{alarm}$, dass alle Referenzen der zugehörigen Klasse zum gleichen absoluten, durch die Messdaten bestimmten Anfangszeitpunkt des Auswertungs-Intervalls verglichen worden sind (Synchronisierung der parallel verlaufenden Abläufe der Datenverarbeitung).

Parallelisierung

In einer weiteren vorteilhaften Variante wird vorgeschlagen, die Verarbeitungsschritte so weit wie möglich zu parallelisieren; dies kann bis auf die Ebene der einzelnen Kenngrößen-Zeitreihen hinab erfolgen. Auf dieser Parallelisierungs-Ebene werden die verschiedenen Ereignis-Klassen, sofern in der vorhergehend beschriebenen Weise definiert, automatisch von einer solchen Parallelisierung eingeschlossen.

Wird die dem System zugrunde liegende Hardware insbesondere im Hinblick auf die Anzahl der Prozessoren bzw. deren Kerne erhöht, kann die dadurch zusätzlich bereitgestellte Systemleistung direkt durch entsprechende Software-Implementierung (fachsprachlich "Threads") des vorzugsweise beschriebenen Verfahrens genutzt werden.

Als Folge einer solchen Erhöhung der Systemleistung kann bei gleichbleibender relativer Auslastung des Systems die Anzahl der verwendeten PMUs erhöht und/oder die zeitliche Auflösung der erfassten Daten durch Verwendung von PMUs mit höherer Zyklusrate (fachsprachlich "PMU reporting rate") verbessert werden. Weiterhin kann eine solche Maßnahme für eine mit der Zyklusrate der PMUs einhergehenden Zyklusrate der Datenauswertung genutzt und auf diese Weise gewährleistet werden, dass auch solche Netz-Ereignisse analysiert werden, die bei einer Ereignis-gesteuerten Analyse wegen fehlender Auslösung, z. B. aufgrund geringer Amplituden-Änderungen, als Folge des Ausfalls der dem Ereignis unmittelbar benachbarten PMUs, einer Auswertung gar nicht erst unterzogen werden.

Zusammenfassend vereinen die oben beschriebenen Ausführungsbeispiele das Prinzip einer Auffindung und Identifikation von Ereignissen im elektrischen Versorgungsnetz durch Vergleich mit auf Grundlage des aktuellen Netzzustandes erstellten Simulationsdaten für vorgegebene Referenz-Ereignisse im Netz mit physikalisch/elektrotechnisch begründbaren Verfahren zur Auswertung von Messdaten-Zeitreihen. Ein Schwerpunkt liegt dabei auf der Auswertung der Signale von Zeiger-Messgeräten, ohne sich hier auf diese zu beschränken.

Durch die vorgeschlagenen Ausführungsbeispiele erhält der Kunde zeitnah Kenntnis über das Auftreten, den Ort und die Ursache von Ereignissen im elektrischen Netz und wird mittels vorgeschlagener Gegenmaßnahmen in die Lage versetzt, rechtzeitig in das Netz einzugreifen oder diese Eingriffe insbesondere im Fall kurzzeitiger Ereignisse durch nachgeschaltete Verarbeitungseinheiten in automatisierter Weise vollziehen zu lassen. Da die Ermittlung der jeweiligen Ereignis-Ursache auf der Grundlage letztlich elementarer und physikalisch unmittelbar nachvollziehbarer Verarbeitungs-Schritte erfolgt, kann das System in transparenter Weise durch Anpassung verschiedener Parameter optimiert werden, wobei sowohl Anwender als auch Lieferant vorhandene elektrotechnische Kenntnisse und Erfahrungen zielgerichtet einbringen können.

Aufgrund des hohen Parallelisierungs-Grades der Verarbeitungsschritte ist die praktische Umsetzung des Verfahrens auch für Systeme mit vielen Messkanälen, wie sie zur Überwachung größerer Netze erforderlich sind und eine entsprechend hohe Systemleistung erfordern, durch entsprechenden Ausbau der dem System zugrunde liegenden Hardware in einfacher Weise möglich.

Die oben beschriebenen Ausführungsbeispiele beziehen sich zusammenfassend vorzugsweise zumindest auch auf Verfahren, bei denen in einem elektrischen Versorgungsnetz zeitsynchron über einen um weitergehende, datenverarbeitende Funktionen erweiterten Phasenzeigerdatensammler PDC (fachsprachlich phasor data collector) erfasste Phasenzeigermesswerte PMU-Daten von Phasenzeigermessgeräten PMU mit entsprechenden, für verschiedene den Netzbetrieb potentiell gefährdende Netzereignisse (vereinfachend als Ereignisse bezeichnet) simulierten Referenzwerten bzw. Referenzdatensätzen (vereinfachend als Referenzen bezeichnet), die auf der Grundlage eines zugehörigen statischen Netzmodells und eines über die Messdaten eines Netzleitsystems in regelmäßigen Abständen erneuerten Netzabbildes wiederkehrend erzeugt werden, verglichen werden und dem Anwender für erkannte Ereignisse verschiedene mögliche Gegenmaßnahmen vorschlagen werden.

Die Figur 7 zeigt ein Ausführungsbeispiel für eine technische Realisierung der Einrichtung 10 gemäß Figur 1. Die Einrichtung 10 wird durch einen Rechner 1001 und einen Speicher 1002 gebildet. In dem Speicher 1002 sind die Konfigurationsdatenbank 121 und Softwaremodule SOF11, SOF122 und SOF123 abgespeichert, die bei Ausführung durch den Rechner 1001 die Datenerfassungseinrichtung 11, die Ereignisanalyseeinrichtung 12 und das Ereignisanalysemodul 122 gemäß Figur 1 bilden. Bezüglich der Funktionsweise der Einrichtung 10 gemäß Figur 7 gelten die obigen Erläuterungen zu den Figuren 1 bis 6 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 10 | Einrichtung |
| 11 | Datenerfassungseinrichtung |
| 12 | Ereignisanalyseeinrichtung |
| 20 | elektrisches Energieversorgungsnetz |
| 30 | Netzleitsystem |
| 121 | Konfigurationsdatenbank |
| 122 | Ereignisanalysemodul |
| 123 | Simulationsmodul |
| 500 | lernendes Netz |
| 501 | Umschaltschritt |
| 502 | Umschaltschritt |
| 1001 | Rechner |
| 1002 | Speicher |
| | |
| A' | Ereignisklasse |
| ABB | Netzabbild |
| B' | Ereignisklasse |
| C' | Ereignisklasse |
| D' | Ereignisklasse |
| D | Messdaten / Messwerte |
| DAP | Datenanalyseprozess |
| dt | Zeitfenster |
| E | Ereignis |
| GM | Gegenmaßnahmen |
| KG | Kenngröße |
| KP | Kommunikationsparameter |
| LDS_Ref | Zeitverlauf |
| LP | Lern-Prozess |
| MOD | Netzmodul |
| Mt | Messpunkte |
| P1 | Hauptprozess |
| P2 | Hauptprozess |
| PDC | Phasenzeigerdatensammler |
| PMU | Phasenzeigermessgerät |
| REF | Referenzereignismodelle |
| RW | Referenzwerte |

| σ | Ähnlichkeitswert |
|---|---|
| SM | Meldungen |
| SOF11 | Softwaremodul |
| SOF122 | Softwaremodul |
| SOF123 | Softwaremodul |
| ST | Anweisungen |
| W | Gewichtungen |

**Patentansprüche**

1.  Verfahren zum Erkennen eines Ereignisses in einem elektrischen Energieversorgungsnetz (20), wobei bei dem Verfahren

    - an zumindest einer Stelle des elektrischen Energieversorgungsnetzes (20) elektrische Kenngrößenwerte (KG) gemessen oder mit an der zumindest einen Stelle gemessenen Messwerten (D) errechnet werden,
    - für ein oder mehr vordefinierte Ereignisse, die im elektrischen Energieversorgungsnetz (20) auftreten können, auf der Basis eines das Netz abbildenden Netzmodells jeweils ereignisbezogene Referenzwerte (RW) errechnet werden, die im Falle eines Eintretens des jeweiligen Ereignisses den Kenngrößenwerten (KG) zumindest näherungsweise entsprechen würden,
    - für jedes vordefinierte Ereignis auf der Basis der jeweiligen ereignisbezogenen Referenzwerte (RW) und der Kenngrößenwerte jeweils ein ereignisbezogener Ähnlichkeitswert (σ) ermittelt wird, und
    - anhand des oder der ereignisbezogenen Ähnlichkeitswerte (σ) ermittelt wird, ob eines der vordefinierten Ereignisse eingetreten ist.

2.  Verfahren nach Anspruch 1,
    **dadurch gekennzeichnet, dass**

    - durch Normierung der Kenngrößenwerte (KG) und der Referenzwerte (RW) normierte Referenzwerte und normierte Kenngrößenwerte gebildet werden,
    - für jeden normierten Kenngrößenwert und jeden zugehörigen normierten Referenzwert jeweils ein ereignisbezogener Ähnlichkeitsfunktionswert gebildet wird und
    - der oder die ereignisbezogenen Ähnlichkeitswerte jeweils ermittelt werden durch zeitliche gewichtete Mittelung der ereignisbezogenen Ähnlichkeitsfunktionswerte über der Zeit in einem vorgegebenen Zeitfenster.

3.  Verfahren nach Anspruch 2,
    **dadurch gekennzeichnet, dass**
    vor der Normierung der Referenzwerte (RW) und der Kenngrößenwerte (KG) die Referenzwerte (RW) um einen stationären Offsetwert korrigiert werden.

4.  Verfahren nach einem der voranstehenden Ansprüche,
    **dadurch gekennzeichnet, dass**

    - die Kenngrößenwerte zu vorgegebenen Zeitpunkten gemessen oder für vorgegebene Zeitpunkte errechnet werden,
    - die ereignisbezogenen Referenzwerte jeweils für dieselben vorgegebenen Zeitpunkte errechnet werden und
    - der oder die ereignisbezogenen Ähnlichkeitswerte jeweils für die vorgegebenen Zeitpunkte ermittelt werden durch zeitliche Gewichtung der Ähnlichkeitsfunktionswerte über der Zeit in einem vorgegebenen Zeitfenster, das vor dem jeweils vorgegebenen Zeitpunkt liegt oder mit diesem endet.

5.  Verfahren nach einem der voranstehenden Ansprüche,
    **dadurch gekennzeichnet, dass**
    die zeitliche Gewichtung der Ähnlichkeitsfunktionswerte über der Zeit in dem vorgegebenen Zeitfenster mit Gewichtungsfaktoren erfolgt, die zeitabhängig oder zeit- und amplitudenabhängig sind.

6.  Verfahren nach einem der voranstehenden Ansprüche,
    **dadurch gekennzeichnet, dass**
    die zeitliche Gewichtung der Ähnlichkeitsfunktionswerte über der Zeit in dem vorgegebenen Zeitfenster mit Gewich-

18

tungsfaktoren erfolgt, die im Zeitfenster über der Zeit in Richtung auf den jeweils vorgegebenen Zeitpunkt abnehmen oder ansteigen.

7. Verfahren nach einem der voranstehenden Ansprüche,
**dadurch gekennzeichnet, dass**
die Gewichtung der Ähnlichkeitsfunktionswerte auf der Basis einer Gewichtung $w_i$ erfolgt, die sich aus einem zeitabhängigen Teil $w_i^t$ und einem amplitudenabhängigen Teil $w_i^a$ wie folgt zusammensetzt:

$$w_i = w_i^{\ t} \cdot w_i^{\ a}$$

8. Verfahren nach einem der voranstehenden Ansprüche,
**dadurch gekennzeichnet, dass**
eine amplitudenabhängige Gewichtung der Ähnlichkeitsfunktionswerte in dem vorgegebenen Zeitfenster mit einem amplitudenabhängigen Teil $w_i^a$ erfolgt gemäß

$$w_i^{\ a} = \left( \frac{\max\left(\Delta A_i^{\ act}, \Delta A_i^{\ ref}\right)}{\max\left(\Delta A_{max}^{\ act}, \Delta A_{max}^{\ ref}\right)} \right)$$

mit

$\Delta A_i^{act/ref}$ : absolute Differenz von Kenngrößenwert aus Messung bzw. Referenz und zugehörigem stationärem Wert zum i-ten Zeitpunkt im vorgegebenen Zeitfenster und
$\Delta A_{max}^{act/ref}$ : Maximalwert der absoluten Differenz der Kenngrößenwerte aus Messung bzw. Referenz und stationärem Kenngrößenwert im gesamten vorgegebenen Zeitfenster.

9. Verfahren nach einem der voranstehenden Ansprüche,
**dadurch gekennzeichnet, dass**
die elektrischen Kenngrößenwerte Amplitudenwerte oder Phasenwerte von Zeigermessgrößen sind oder mit Amplitudenwerten und/oder Phasenwerten von Zeigermessgrößen errechnet worden sind.

10. Verfahren nach einem der voranstehenden Ansprüche,
**dadurch gekennzeichnet, dass**
die Kenngrößenwerte (KG) messstellenübergreifend sind und mit an zumindest zwei Stellen gemessenen Messwerten (D) errechnet werden.

11. Verfahren nach einem der voranstehenden Ansprüche,
**dadurch gekennzeichnet, dass**
die ereignisbezogenen Ähnlichkeitswerte auf der Basis eines Netzmodells, das durch maschinelles Lernen eines Computersystems erstellt worden ist, errechnet werden.

12. Verfahren nach einem der voranstehenden Ansprüche,
**dadurch gekennzeichnet, dass**
die ereignisbezogenen Ähnlichkeitswerte in einem zumindest zeitweise mindestens zwei Prozesse gleichzeitig ausführenden Rechner ermittelt werden, von denen einer ein Datenanalyse-Prozess (DAP) und einer ein Lern-Prozess (LP) ist.

13. Verfahren nach einem der voranstehenden Ansprüche,
**dadurch gekennzeichnet, dass**
die ereignisbezogenen Ähnlichkeitswerte in einem Rechner ermittelt werden, der parallel zumindest zwei Hauptprozesse (P1, P2) durchführt, von denen jeweils einer den Datenanalyse-Prozess (DAP) und der andere den Lern-Prozess (LP) durchführt und die jeweils abwechselnd und relativ zueinander gegenläufig in den Datenanalyse-Prozess (DAP) und den Lern-Prozess (LP) umgeschaltet werden.

14. Einrichtung (10) zum Erkennen eines Ereignisses in einem elektrischen Energieversorgungsnetz (20), mit

- einer Datenerfassungseinrichtung (11), die dazu ausgebildet ist, an zumindest einer Stelle des elektrischen Energieversorgungsnetzes (20) elektrische Kenngrößenwerte (KG) zu messen oder mit an der zumindest einen Stelle gemessenen Messwerten (D) zu errechnen, und

- einer Ereignisanalyseeinrichtung (12), die dazu ausgebildet ist, für ein oder mehr vordefinierte Ereignisse, die im elektrischen Energieversorgungsnetz (20) auftreten können, auf der Basis eines das Netz abbildenden Netzmodells jeweils ereignisbezogene Referenzwerte (RW) zu errechnen, die im Falle eines Eintretens des jeweiligen Ereignisses den Kenngrößenwerten (KG) zumindest näherungsweise entsprechen würden, für jedes vordefinierte Ereignis auf der Basis der jeweiligen ereignisbezogenen Referenzwerte (RW) und der Kenngrößenwerte (KG) jeweils einen ereignisbezogenen Ähnlichkeitswert zu ermitteln, und anhand des oder der ereignisbezogenen Ähnlichkeitswerte zu ermitteln, ob eines der vordefinierten Ereignisse eingetreten ist.

## FIG 1

## FIG 2

FIG 3

LDS_Ref1

LDS_Ref2

⋮

LDS_Refn

PMU54 →D (PMU54)→ 500

$\sigma_3{}^{\kappa}$ (Ref1)

$\sigma_3{}^{\kappa}$ (Ref2)

⋮      ⋮

$\sigma_3{}^{\kappa}$ (Refn)

FIG 4

LP

dt

DAP                    DAP

D (PMU54)

t

FIG 5

P1 → LP

501 → DAP

502

P2 → DAP          LP

D (PMU54)

t

## FIG 6

## FIG 7

Europäisches Patentamt
European Patent Office
Office européen des brevets

# EUROPÄISCHER RECHERCHENBERICHT

**Nummer der Anmeldung**

EP 18 20 3415

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2011/032579 A1 (SIEMENS AG [DE]; LITZINGER ANDREAS [DE]) 24. März 2011 (2011-03-24) | 1-5,7-14 | INV. H02J3/24 |
| A | * Seite 3, Zeilen 4-16; Abbildungen 1-5 * * Seite 10, Zeile 28 - Seite 15, Zeile 24 * * Seite 18, Zeile 11 - Seite 11, Zeile 34 * ----- | 6 | ADD. H02J3/00 |
| X | CN 104 967 151 B (CHINA SOUTH POWER GRID ELECTRIC POWER RES INST CO; CSG POWER GRID TECH) 11. August 2017 (2017-08-11) * Absätze [0001], [0036] - [0072]; Abbildungen 1-4,7-9 * ----- | 1,14 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 10. Dezember 2018 | Bergler, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 20 3415

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-12-2018

| Im Recherchenbericht angeführtes Patentdokument | Datum der Veröffentlichung | Mitglied(er) der Patentfamilie | Datum der Veröffentlichung |
|---|---|---|---|
| WO 2011032579 A1 | 24-03-2011 | BR 112012005780 A2<br>CN 102498629 A<br>EP 2478607 A1<br>RU 2012114608 A<br>WO 2011032579 A1 | 16-02-2016<br>13-06-2012<br>25-07-2012<br>27-10-2013<br>24-03-2011 |
| CN 104967151 B | 11-08-2017 | KEINE | |

Für nähere Einzelheiten zu diesem Anhang : siehe Amtsblatt des Europäischen Patentamts, Nr.12/82